# EUROPEAN PATENT SPECIFICATION

(11) **EP 3 401 898 B1**
(45) Date of publication and mention of the grant of the patent: **20.04.2022**
(21) Application number: 16889373.3
(22) Date of filing: 10.11.2016
(51) Int. Cl.: G09G 5/00, G06F 3/041, G06F 3/0481, G06F 3/0484, G09F 9/00, G09F 9/30, G06F 1/16

(54) **DISPLAY DEVICE**
ANZEIGEVORRICHTUNG
DISPOSITIF D'AFFICHAGE

(30) Priority: 05.02.2016 JP 2016020987
(43) Date of publication of application: 14.11.2018
(73) Proprietor: NTT Docomo, Inc., Tokyo 100-6150 (JP)
(72) Inventor: OHATA, Maki, Tokyo 100-6150 (JP); TAKIMOTO, Makoto, Tokyo 100-6150 (JP); KIMURA, Shinji, Tokyo 100-6150 (JP); TAGAWA, Kinya, Tokyo 107-0061 (JP)
(74) Representative: Viering, Jentschura & Partner mbB Patent- und Rechtsanwälte
(86) International application number: PCT/JP2016/083406
(87) International publication number: WO 2017/134890

(56) References cited:
- JP-A- 2014 010 597
- US-A1- 2013 201 208
- US-A1- 2013 203 469
- US-A1- 2014 218 375

## Description

### Technical Field

The present invention relates to a display device that displays content.

### Background Art

Conventionally, there is a portable terminal device that is able to more effectively utilize a flexible display withdrawn from a device main body (for example, refer to Patent Literature 1). Specifically, in a case where withdrawal of the flexible LCD is detected, the portable terminal device measures a slide amount and determines a display direction of a single image and a display size of the image on the basis of the slide amount.

### Citation List

### Patent Literature

[Patent Literature 1]
   Japanese Unexamined Patent Republication No. 2007-077649
[Patent Literature 2]
   US 2013/0201208 A1 describes a display device that incorporates a supplemental display screen that is stored within a main body of the display device. As the supplemental display is pulled out from storage within the main body of the display device, objects that were displayed on the main display may be transitioned onto the supplemental display. Methods may take into account the length of the supplemental display that is pulled out from storage.

### Summary of Invention

### Technical Problem

Incidentally, in the portable terminal device described above, display control of the single image is performed, but displaying a plurality of images may also be considered. In a case where a plurality of types of content are displayed, it is desired to perform display control so that the plurality of types of content are displayed only when it is better to output the plurality of types of content to a user on the basis of an operation of the user.

Therefore, an object is to provide a display device capable of performing display control so that a plurality of types of content are displayed on the basis of an operation of a user.

### Solution to Problem

In order to solve the above-described problem, display devices according to the present invention include the features of the independent claims.

### Advantageous Effects of Invention

According to the present invention, it is possible to perform display control so that a plurality of types of content are displayed when it is better to display the plurality of types of content to a user on the basis of an operation of the user.

### Brief Description of Drawings

FIG. 1 is an external view illustrating an external appearance of a display device 100.
FIG. 2 is a cross-sectional view schematically illustrating a withdrawal detection mechanism of the display device 100.
FIG. 3 is a diagram for describing a withdrawal control mechanism of the display device 100.
FIG. 4 is a block diagram illustrating a function of the display device 100 according to the present embodiment.
FIG. 5 is a hardware configuration diagram of the display device 100.
FIG. 6 is a flowchart (1) illustrating a processing procedure of the display device 100.
FIG. 7 is an explanation diagram illustrating display processing.
FIG. 8 is a flowchart (2) illustrating the processing procedure of the display device 100.
FIG. 9 is a flowchart (3) illustrating the processing procedure of the display device 100.

### Description of Embodiments

An embodiment of the present invention will be described with reference to the accompanying drawings. Whenever possible, the same parts are denoted by the same reference numerals, and repetitive descriptions will be omitted.

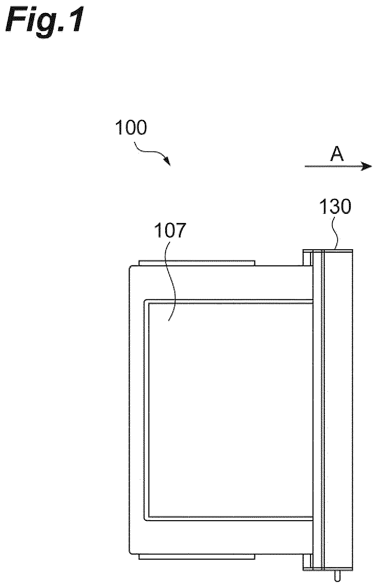

FIG. 1 is an external view illustrating an external appearance of a display device 100 according to the present embodiment. The display device 100 is a device including a display portion 107 (for example, a flexible display) that is able to be withdrawn in a withdrawal direction A. In the state of FIG. 1, only a part of the display portion 107 is able to be viewed by a user, and the remaining portion is accommodated in an accommodation portion 130 of the display device 100 in a roll shape. Therefore, the display device 100 can be expanded (to a state in which the display portion 107 has the maximum width) when the display portion 107 is withdrawn. On the other hand, the state of FIG. 1 shows a reduced state in which the display portion 107 is accommodated. In a case where the display portion 107 is withdrawn in the withdrawal direction A by the user, the display portion 107 accommodated in the accommodation portion 130 is also withdrawn accordingly. The display device 100 displays content on a display surface of the display portion 107. The content may be a moving image or a still image. According to a change from the reduced state to the expanded state, the display device 100 expands the content being displayed with the expansion of the display width and displays the content.

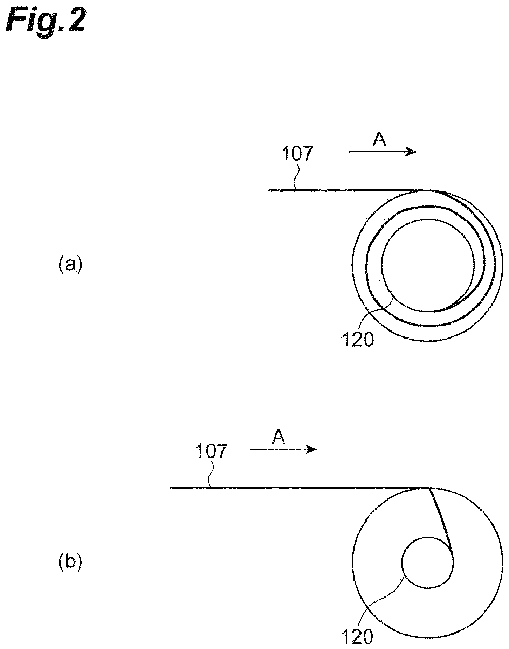

A withdrawal detection mechanism is built in the display device 100 under the display portion 107 of the display device 100. In a case where the display portion 107 is withdrawn in the withdrawal direction A, the display portion 107 is withdrawn in the withdrawal direction A by the withdrawal detection mechanism. FIG. 2 is a cross-sectional view schematically illustrating the withdrawal detection mechanism. The withdrawal detection mechanism 120 includes a rotation shaft and a flat spiral spring, and most of the display portion 107 is accommodated in the accommodation portion 130. When the display portion 107 is withdrawn, the flat spiral spring outputs a force energized to a side opposite the withdrawal direction A. In this manner, a load is constantly applied to the accommodation portion 130 in a direction in which the display portion 107 is wound by the flat spiral spring.

Before the display portion 107 is withdrawn as shown in FIG. 1, as shown FIG. 2(a), most of the display portion 107 is wound around the withdrawal detection mechanism 120 and is accommodated in the accommodation portion 130 of the display device 100. As shown in FIG. 2(b), in a case where the display portion 107 is withdrawn in the withdrawal direction A by the user, the withdrawal detection mechanism 120 rotates. A sensor that is not shown detects an operation amount of the flat spiral spring of the withdrawal detection mechanism 120 by the rotation. Therefore, the display device 100 calculates a withdrawal amount of the display portion 107.

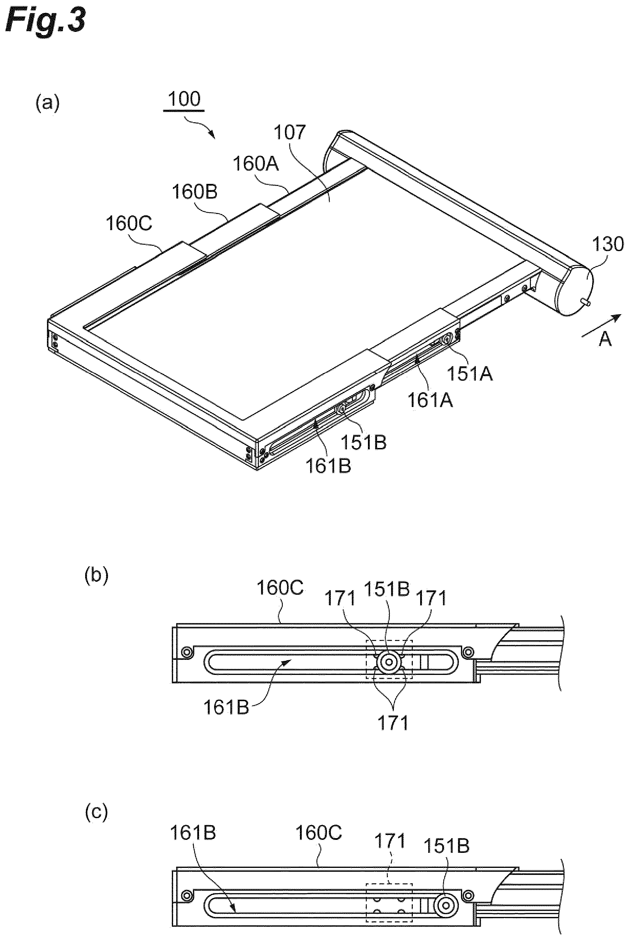

In addition, the display device 100 includes a withdrawal control mechanism that controls the withdrawal of the display portion 107. In a case where the display portion 107 is withdrawn in the withdrawal direction A, the withdrawal control mechanism stops the withdrawal of the display portion 107. The withdrawal control mechanism will be described with reference to FIG. 3. FIG. 3(a) is an external perspective view of the display device 100. In the reduction state shown in FIG. 1, in a case where the display portion 107 is withdrawn in the withdrawal direction A, as shown in FIG. 3(a), the display portion 107 is withdrawn and the display portion 107 expands.

Frames 160A to 160C are members that hold the display portion 107 that is accommodated in the roll shape in a plane shape. The frames 160 are configured to be able to perform the withdrawal in stages according to a user operation performed by the user. In addition, the frames 160 are fixed with each other by a holding tool 151A, a holding tool 151B, and the like such as a screw having a frictional force higher than a winding force of the flat spiral spring included in the accommodation portion 130, and a withdrawal state is able to be maintained. In addition, since the frame 160 is fixed by the holding tool 151 having a friction coefficient by which a normal user is able to perform the withdrawal, it is easy to perform the withdrawal.

In addition, in a case where the display device 100 is in the reduced state, the frame 160A is accommodated in the frame 160B. In addition, the frame 160B is accommodated in the frame 160C. A slide hole 161A and a slide hole 161B for sliding in the withdrawal direction A according to the withdrawal operation performed by the user are formed on respective side surfaces of the frame 160B and the frame 160C. In addition, as shown in a side view of the frame 160C of FIGS. 3(b) and 3(c), a protrusion portion 171 is provided on a side of the accommodation portion 130 of the slide hole 161B.

The holding tool 151A connected to the frame 160A slides in the slide hole 161A of the frame 160B according to the withdrawal performed by the user. In addition, the holding tool 151B connected to the frame 160B slides in the slide hole 161B of the frame 160C according to the withdrawal performed by the user.

In a case where the display device 100 is in the reduced state, when the display portion 107 is withdrawn in the withdrawal direction A by the user, first, the frame 160A is withdrawn and the display device 100 is fixed by the holding tool 151A of the frame 160A and the slide hole 161A of the frame 160B accordingly. In addition, when the display portion 107 is withdrawn in the withdrawal direction A by the user, the frame 160B is withdrawn accordingly. In this case, as shown in FIG. 3(b), since the holding tool 151B of the frame 160B fits into the protrusion portion 171, the display device 100 is fixed by the holding tool 151B and the protrusion portion 171 of the slide hole 161B of the frame 160C. In this state, even if the user attempts to perform the withdrawal with the same force, the display device 100 is fixed. In this manner, the withdrawal control mechanism temporarily fixes the display device 100.

In addition, in a case where the display portion 107 is withdrawn in the withdrawal direction A by the user, the holding tool 151B comes out of the protrusion portion 171 and slides in the slide hole 161B. As a result, the display portion 107 is further withdrawn, and the display device 100 is fixed by the holding tool 151B and the slide hole 161B of the frame 160C as shown in FIG. 3(c). In this manner, in a case where the display portion 107 is further withdrawn by the user after the display portion 107 is temporarily fixed, the withdrawal control mechanism enables the display portion 107 to be additionally withdrawn.

In a case where the display device 100 displays predetermined content (first content), after the display portion 107 is withdrawn, the display device 100 expands display of the content until the display portion 107 is temporarily fixed. In addition, in a case where the display portion 107 is additionally withdrawn, other content (second content) is displayed on the additionally withdrawn display portion 107 in a case where a predetermined condition is satisfied. Here, the first content is content to be displayed on a main screen such as a web screen and the second content is additionally displayed content such as a screen including a launcher for calling an application different from an application for displaying the first content and an operation screen of the first content. The first content and the second content may be stored in the display device 100 in advance, or may be acquired using a communication network and stored. In addition, it is assumed that the first content and the second content are stored in association with each other. In consideration of displaying the first content and the second content, the protrusion portion 171 is provided at a position serving as a reference for dividing the display portion 107 displaying the first content and the display portion 107 displaying the second content.

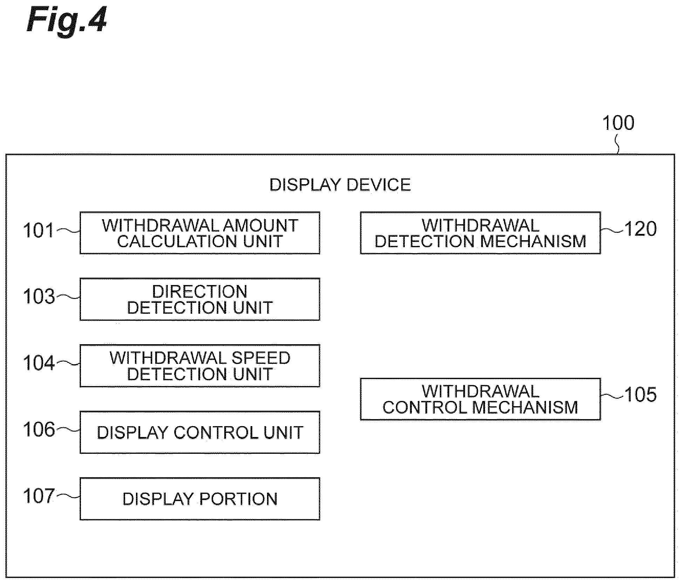

FIG. 4 is a block diagram illustrating a function of the display device 100 according to the present embodiment. As shown in FIG. 4, the display device 100 includes a withdrawal amount calculation unit 101, the withdrawal detection mechanism 120, a direction detection unit 103 (device direction detection means), a withdrawal speed detection unit 104 (speed detection means), a withdrawal control mechanism 105 (temporary fixing means), a display control unit 106 (display control means), and the display portion 107 (display means, contact state detection means).

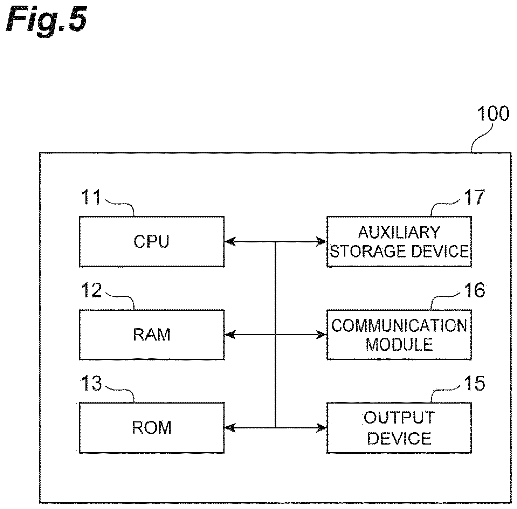

FIG. 5 is a hardware configuration diagram of the display device 100. As shown in FIG. 5, the display device 100 shown in FIG. 4 is physically configured as a computer system including a CPU 11, a RAM 12 and a ROM 13 that are main storage devices, an output device 15 that is a flexible touch panel display, a communication module 16 that is a data transmission and reception device such as a network card, an auxiliary storage device 17 such as a semiconductor memory, and the like. Each function described with reference to FIG. 4 is realized by operating the output device 15 and the communication module 16 under control of the CPU 11 by loading predetermined computer software on the hardware such as the CPU 11 and the RAM 12 shown in FIG. 5, and reading and writing data in the RAM 12 or the auxiliary storage device 17. Hereinafter, each function block will be described on the basis of the functional block shown in FIG. 4.

The withdrawal amount calculation unit 101 is a part that calculates the withdrawal amount of the display portion 107 (the withdrawal amount of the display portion 107 using the reduced state as a reference). Specifically, the withdrawal amount calculation unit 101 acquires the operation amount of the flat spiral spring of the withdrawal detection mechanism 120 and calculates the withdrawal amount on the basis of the operation amount of the flat spiral spring. For example, the withdrawal amount calculation unit 101 stores information on the withdrawal amount corresponding to the operation amount of the flat spiral spring stored in advance and calculates the withdrawal amount using the information and the operation amount of the flat spiral spring. The withdrawal amount calculation unit 101 transmits the withdrawal amount to the withdrawal speed detection unit 104 and the display control unit 106 at predetermined time intervals. In this manner, the withdrawal amount calculation unit 101 calculates the withdrawal amount as information indicating the state in which the display portion 107 is withdrawn and transmits the withdrawal amount to the withdrawal speed detection unit 104 and the display control unit 106.

The withdrawal detection mechanism 120 is a mechanism part disposed below the display portion 107 and is a part that detects the withdrawal of the display portion 107. A specific configuration is shown in FIG. 2.

The direction detection unit 103 is a part that detects a device direction of the display device 100. Specifically, the direction detection unit 103 is a known acceleration sensor, geomagnetic sensor, attitude sensor, or the like, detects a gravity direction of the display device 100, and transmits a direction detection result to the display control unit 106.

The withdrawal speed detection unit 104 is a part that detects a withdrawal speed of the display portion 107. Specifically, the withdrawal speed detection unit 104 acquires the withdrawal amount from the withdrawal amount calculation unit 101 at predetermined time intervals and calculates the withdrawal speed on the basis of a change in the withdrawal amount. The withdrawal speed detection unit 104 transmits the calculated withdrawal speed to the display control unit 106.

The withdrawal control mechanism 105 is a part that temporarily fixes the withdrawal state of the display portion 107 in a case where the display portion 107 is withdrawn to the position serving as the reference (in a case where the holding tool 151B is positioned at the protrusion portion 171) by the withdrawal performed by the user. A specific configuration is shown in FIG. 3.

The display control unit 106 is a part that causes the display portion 107 to display the second content together with the first content after a display width of the display portion 107 based on the withdrawal amount calculated by the withdrawal amount calculation unit 101 exceeds a display threshold value that is a predetermined reference (a display width when the holding tool 151B is positioned at the protrusion portion 171 by the withdrawal performed by the user).

In addition, in a case where the display width based on the withdrawal amount has exceeded the display threshold value, the display control unit 106 causes the display portion 107 to display the second content on the basis of the device direction detected by the direction detection unit 103.

In addition, in a case where the display width based on the withdrawal amount has exceeded the display threshold value, the display control unit 106 causes the display portion 107 to display the second content on the basis of the withdrawal speed after the threshold value detected by the withdrawal speed detection unit 104.

Specifically, the display control unit 106 acquires the withdrawal amount from the withdrawal amount calculation unit 101 at predetermined time intervals. In addition, the display control unit 106 acquires the detection result of the gravity direction of the display device 100 from the direction detection unit 103. In addition, the display control unit 106 acquires the withdrawal speed from the withdrawal speed detection unit 104.

The display control unit 106 stores the display width of the reduced state in advance, adds the withdrawal amount acquired from the withdrawal amount calculation unit 101 and the display width of the reduced state, and calculates the display width of the display portion 107. In this manner, the display control unit 106 calculates the display width using the information indicating the withdrawal state of the display portion 107 (the withdrawal amount). The display control unit 106 determines whether or not the display width is equal to or greater than the display threshold value stored in advance. In a case where the display width is less than the display threshold value, the display control unit 106 displays only the first content (for example, expands and displays the first content on the basis of the change in the display width). In addition, thereafter, in a case where the display width based on the withdrawal amount indicates the maximum display width, the display control unit 106 displays not only the first content but also the second content.

In addition, in a case where the display device 100 faces sideways (in a case where the withdrawal direction of the display device 100 is horizontal as viewed by the user) due to an input operation performed in advance by the user and information indicating that the second content is to be displayed is input in advance, when the direction of the display device 100 derived from the detection result acquired from the direction detection unit 103 is horizontal after the display width exceeds the display threshold value, the display control unit 106 may display not only the first content but also the second content at a timing at which the display width becomes the maximum width. In addition, after the display width exceeds the display threshold value, in a case where the withdrawal speed acquired from the withdrawal speed detection unit 104 is equal to or greater than a predetermined threshold speed, the display control unit 106 may display not only the first content but also the second content at the timing at which the display width becomes the maximum width.

The display portion 107 is a part that displays content such as a web screen acquired through a network, photograph data stored in the display device 100, or a menu screen. In addition, the display portion 107 may be a touch panel display that is able to receive a touch operation performed by the user on a touch surface of the display portion 107.

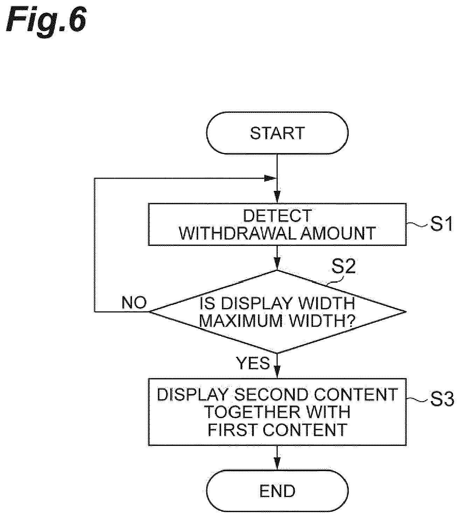

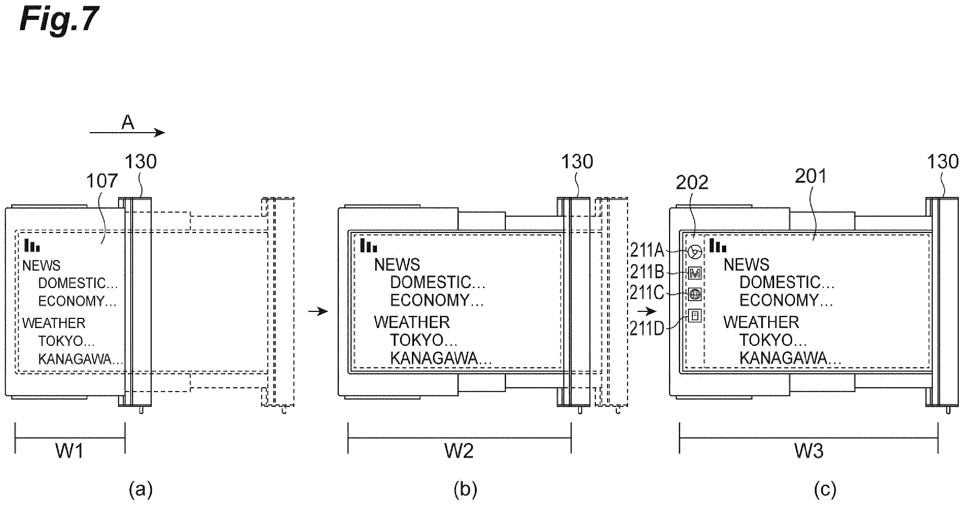

Next, an operation of the display device 100 configured as described above will be described with reference to FIGS. 6 and 7. FIG. 6 is a flowchart illustrating the operation of the display device 100 according to an example not representing the claimed invention and is a flowchart of processing of determining whether or not to display the second content on the basis of only the display width. FIG. 7 is a diagram illustrating a state in which the content of a display target is changed according to the display width.

It is assumed that the display device 100 displays the first content on the display portion 107 as a premise. For example, the state of FIG. 7(a) is assumed as the premise. In addition, when the display width of the reduced state (display width W1) is defined as 100%, the display width of the display threshold value is 280% (display width W2) and the maximum display width is 300% (display width W3).

First, the withdrawal amount calculation unit 101 calculates the withdrawal amount on the basis of the operation state of the withdrawal detection mechanism 120 and transmits the calculated withdrawal amount to the display control unit 106 (step S1). The display control unit 106 calculates the current display width of the display portion 107 using the withdrawal amount and the display width of the reduced state. The display control unit 106 determines whether or not the display width reaches the maximum display width (step S2). In a case where the display width does not reach the maximum display width (step S2: NO), the processing proceeds to step S1. On the other hand, when the result of determining whether or not the display width has reached the maximum width is that the display width has reached the maximum width (step S2: YES), the display control unit 106 displays the second content together with the first content on the display portion 107 (step S3). For example, as shown in FIG. 7(c), the display control unit 106 displays the first content (a web screen related to news) on a display area 201 and displays launcher buttons 211A to 211D for executing applications (for example, a movie reproduction application, a mail application, and the like) as the second content on a display area 202. Instead of the launcher buttons 211A to 211D, an operation screen of the first content may be displayed as the second content. For example, in a case where a web screen is displayed as the first screen, an operation screen related to the web screen (a button for bookmarking, or a button for switching the web screen such as refresh of the web screen) may also be displayed as the second content. In addition, in a case where a moving image of a moving image reproduction application is displayed as the first content, an operation screen for reproduction control such as switching a chapter of the moving image that is a reproduction target may be displayed as the second content. In addition, when the display width reaches the display threshold value, as shown in FIG. 7(b), the display portion 107 is temporarily fixed.

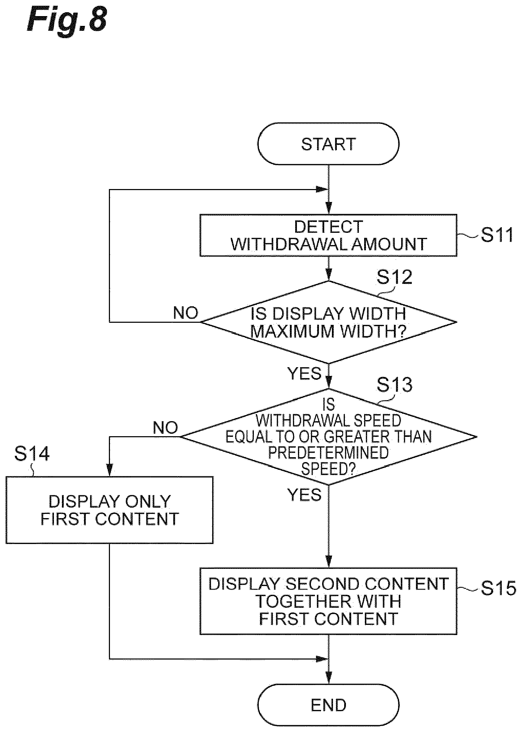

Next, an example of processing of displaying the second content on the basis of the display width of the display device 100 and the withdrawal speed of the display portion 107 will be described using a flowchart shown in FIG. 8.

Since processing of step S11 and step S12 is the same as the processing of step S1 and step S2 in the flowchart shown in FIG. 6, respectively, description will be omitted. The display control unit 106 determines whether or not the withdrawal speed acquired from the withdrawal speed detection unit 104 after reaching the display threshold value is equal to or greater than a predetermined speed threshold value (step S13). As a result of the above-described determination, in a case where the display control unit 106 determines that the withdrawal speed acquired from the withdrawal speed detection unit 104 after reaching the display threshold value is equal to or greater than the predetermined speed threshold value (step S13: YES), the display control unit 106 displays the second content together with the first content on the display portion 107 (step S15). In addition, in a case where the display control unit 106 determines that the withdrawal speed acquired from the withdrawal speed detection unit 104 after reaching the display threshold value is less than the predetermined speed threshold value as a result of the above-described determination (step S13: NO), the display control unit 106 displays only the first content (step S14).

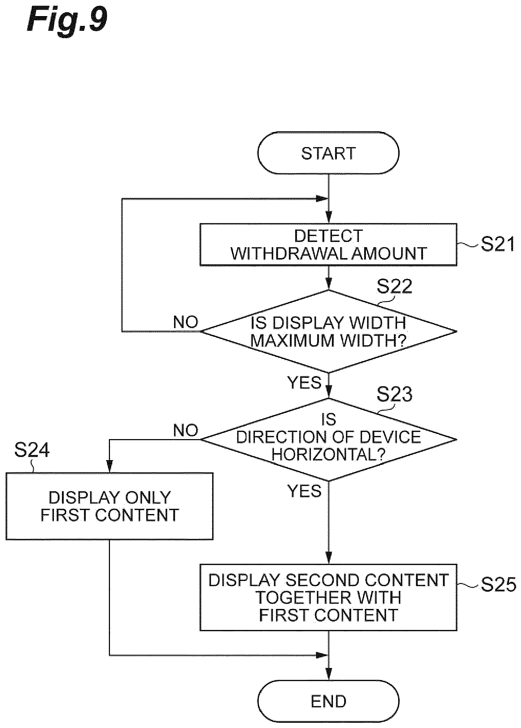

Next, an example of processing of displaying the second content on the basis of the display width and the device direction will be described using a flowchart shown in FIG. 9.

Since processing of step S21 and step S22 are the same as the processing of step S1 and step S2 in the flowchart shown in FIG. 6, respectively, description will be omitted. The display control unit 106 determines whether or not the display device 100 faces sideways on the basis of the direction detection result of the display device 100 acquired from the direction detection unit 103 after reaching the display threshold value (step S23). As a result of the above-described determination, in a case where the display control unit 106 determines that the display device 100 faces sideways by the direction detection result of the display device 100 acquired from the direction detection unit 103 after reaching the display threshold value (step S23: YES), the display control unit 106 displays the second content together with the first content on the display portion 107 (step S25). In addition, as a result of the above-described determination, in a case where the display control unit 106 determines that the display device 100 faces sideways by the direction detection result of the display device 100 acquired from the direction detection unit 103 after reaching the display threshold value (step S23: NO), the display control unit 106 displays only the first content (step S24).

Next, effect of the display device 100 according to the present embodiment will be described. In the display device 100 of the present embodiment, the withdrawal amount calculation unit 101 calculates the withdrawal amount of the display portion 107 and transmits the withdrawal amount to the display control unit 106. In a case where the display width of the display portion 107 based on the withdrawal amount exceeds the threshold value, the display control unit 106 causes the display portion 107 to display the second content together with the first content.

In this case, the withdrawal amount is detected and the content (the second content) other than the first content is displayed in a case where the display width based on the withdrawal amount exceeds the threshold value. Therefore, it is possible to display the plurality of contents only when it is better to output the plurality of contents to the user according to the withdrawal operation of the user. That is, it is possible to suitably perform the display control of the plurality of contents according to a withdrawal situation. In particular, as the above-described embodiment, the display control unit 106 causes the first content to be displayed in most of the maximum display width and the second content to be display in the remaining portion. Therefore, it is possible to display the second content (for example, a screen including a launcher or an operation screen) as a sub content while displaying the first content (for example, a web screen) as a main content.

In addition, in the display device 100, the withdrawal control mechanism 105 temporarily fixes the display portion 107 at the position served as the reference. In this case, it is possible to causes the user to sense the timing at which the second content is displayed.

In addition, in the display device 100, the direction detection unit 103 detects the device direction of the display device 100, and in a case where the display width based on the withdrawal amount exceeds the threshold value, the display control unit 106 displays the second contents on the display portion 107 further on the basis of the device direction detected by the direction detection unit 103. In this case, in a case where the display width based on the withdrawal amount exceeds the threshold value, the display device 100 displays the second content on the basis of the direction of the display device. Therefore, it is possible to display the second contents in a case of a direction in which it is able to be determined that it is desired to also display the second content to the user.

In addition, in the display device 100, the withdrawal speed detection unit 104 detects the withdrawal speed of the display portion 107, and in a case where the display width based on the withdrawal amount exceeds the display threshold value, the display control unit 106 displays the second contents on the display portion 107 on the basis of the withdrawal speed detected by the withdrawal speed detection unit 104 after the display width exceeds the display threshold value. In this case, in a case where the display width based on the withdrawal amount exceeds the display threshold value, the display device 100 displays the second content on the basis of the withdrawal speed. Therefore, it is possible to display the second content in a case where the withdrawal is performed at a speed at which it is able to be determined that it is desired to also display the second content to the user.

In the above-described embodiment, a case where the display control is performed on the basis of the display width and the direction of the display device 100 and a case where the display control is performed on the basis of the display width and the withdrawal speed of the display device 100 have been described. However, the display control may be performed on the basis of the display width, the direction of the display device 100, and the withdrawal speed of the display device 100. For example, the display control unit 106 may display also the second content in a case where the display width exceeds the display threshold value, the display direction faces sideways, and the withdrawal is performed at the speed equal to or greater than the speed threshold value.

In the above-described embodiment, a case where the display control unit 106 displays the second content together with the first content in a case where the display device 100 is horizontal direction by the detection result by the direction detection unit 103 has been described. However, in a case where the display device 100 faces another direction and an intention of displaying the second content together with the first content is input by an input operation of the user, the second content may be displayed together with the first content in a case where the display device 100 faces another direction such as a vertical direction according to the input.

In the above-described embodiment, a case where the display control unit 106 displays the second content together with the first content in a case where the withdrawal speed is equal to or greater than the speed threshold value by the detection result by the withdrawal speed detection unit 104 has been described. However, the second content may be displayed together with the first content in a case where the withdrawal speed is less than the speed threshold value.

In the above-described embodiment, a case where the withdrawal control mechanism 105 temporarily fixes the display portion 107 once after the display portion 107 is withdrawn by the user has been described. However, the display portion 107 may be temporarily fixed a plurality of times.

In addition, a pressure sensor may be provided around the protrusion portion 171 and the display control unit 106 may acquire a detection result by the pressure sensor to determine whether or not the display portion is temporarily fixed.

In addition, in the above-described embodiment, a case where the display control unit 106 calculates the display width from the withdrawal amount calculated by the withdrawal amount calculation unit 101, and the display control unit 106 determines whether or not the display width reaches the display threshold value or determines whether or not the display width becomes the maximum width has been described. However, the determination may be performed by another method. For example, a sensor (for example, a pressure sensor) is provided at a position where the holding tool 151A is fixed after the display portion 107 is withdrawn, a position of the protrusion portion 171, and a position where the holding tool 151B is fixed after the display portion 107 is withdrawn, the display control unit 106 may acquire a detection result by the sensor, and display control unit 106 may determine whether or not the display width reaches the reference or determine whether or not the display width becomes the maximum display width by the detection result. For example, the display control unit 106 determines that the display width reaches the reference in a case where it is detected that the holding tool 151A is fixed and the holding tool 151B is positioned at the protrusion portion 171 by the sensor. In addition, in a case where it is further detected that the holding tool 151B is fixed by the sensor, the display control unit 106 determines that the display width becomes the maximum display width.

In addition, in the above-described embodiment, a case where the second content is displayed together with the first content on the basis of the withdrawal speed or the device direction after the display width becomes the maximum width has been described. Instead of this, when the display portion 107 is withdrawn, in a case where a finger of the user is touching the display portion 107 (for example, in a case where the user performs a long tap), the second content may be displayed together with the first content on the basis of the contact state of the finger of the user after the display width becomes the maximum width.

For example, in a case where the finger of the user is separated from the display portion after the display width becomes the maximum width as a result of the withdrawal of the display portion 107 in a state in which the finger of the user touches the display portion 107, it is assumed that information indicating that the second content is displayed is input in advance by an input operation from the user. At this time, the display portion 107 sequentially transmits information indicating whether or not the finger of the user is touching the display portion to the display control unit 106. The display control unit 106 determines that the finger of the user is touching the display portion while the display portion 107 is withdrawn using the information acquired from the display portion 107, and after the display width becomes the maximum width, when the finger of the user is separated from the display portion, the display control unit 106 displays not only the first content but also the second content.

The present invention has been described above in detail, but it will be obvious to those skilled in the art that the present invention is not limited to the embodiment described in the present specification. The present invention can be implemented as changes and modifications without departing from the scope of the present invention as defined by the claims. Therefore, the description of the present specification is for the purpose of illustration and does not have any restrictive meaning to the present invention.

In addition, notification of information is not limited to the aspect/embodiment described in the present specification, and may be performed by other methods. For example, the notification of information may be performed by physical layer signaling (for example, downlink control information (DCI), uplink control information (UCI)), upper layer signaling (for example, radio resource control (RRC) signaling, medium access control (MAC) signaling, broadcast information (master information block (MIB), system information block (SIB))), other signals, or a combinations thereof. In addition, the RRC signaling may be referred to as an RRC message, and for example, the RRC signaling may be an RRC connection setup message, an RRC connection reconfiguration message, or the like.

In addition, each aspect/embodiment described in the present specification may be applicable to long term evolution (LTE), LTE-advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), and systems using any other appropriate systems and/or next generation systems expanded on the basis of the systems.

In addition, the processing procedures, the sequences, the flowcharts, and the like of each aspect/embodiment described in the present specification may be reversed in order unless there is a contradiction. For example, the method described in the present specification presents elements of various steps in an exemplary order and is not limited to a presented specific order.

The above-described information and the like can be output from the higher layer (or the lower layer) to the lower layer (or the higher layer). The above-described information and the like may be input and output through via a plurality of network nodes.

The input and output information and the like may be stored in a specific place (for example, a memory) or may be managed by a management table. The input and output information and the like may be overwritten, updated, or additionally written. The output information and the like may be deleted. The input information or the like may be deleted. The input information and the like may be transmitted to another device.

The determination may be performed in accordance with a value (0 or 1) indicated by one bit, may be performed in accordance with a Boolean value (true or false), or may be performed by a comparison of numerical values (for example, a comparison with a predetermined value).

Each aspect/embodiment described in the present specification may be used alone, may be used in combination, or may be switched in association with execution. In addition, a notification of predetermined information (for example, a notification indicating "being X") is not limited to one which is performed explicitly and may be performed implicitly (for example, a notification of the predetermined information is not given).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

In addition, software, commands, and the like may be transmitted and received via a transmission medium. For example, in a case where software is transmitted from a web site, a server, or any other remote source using a wired technology such as a coaxial cable, a fiber optic cable, a twisted pair, or a digital subscriber line (DSL) and/or a wireless technology such as infrared rays, a radio wave, or a microwave, the wired technology and/or the wireless technology are included in a definition of a transmission medium.

The information, signals, and the like described in the present specification may be indicated using any one of a variety of different techniques. For example, the data, instructions, commands, information, signals, bits, symbols, chips, and the like which are mentioned throughout the above description may be indicated by voltages, currents, electromagnetic waves, magnetic fields, magnetic particles, optical fields or photons, or an arbitrary combination thereof.

In addition, the terms described in the present specification and/or terms necessary for understanding the present specification may be replaced with terms having the same or similar meanings. For example, a channel and/or a symbol may be a signal. In addition, a signal may be a message. In addition, a component carrier (CC) may be referred to as a carrier frequency, a cell, or the like.

The terms "system" and "network" used in the present specification are used interchangeably.

In addition, the information, parameters, and the like described in the present specification may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present specification in some cases. Since various channels (for example, the PUCCH, the PDCCH, and the like) and information elements (for example, the TPC or the like) can be identified by suitable names, the various names allocated to the various channels and the information elements are not limited in any respect.

The mobile station communication terminal is referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms by those skilled in the art.

In addition, the terms "determining" and "deciding (determining)" used in the present specification may include a wide variety of actions. For example, "determining" and "deciding" may include, for example, events in which events such as judging, calculating, computing, processing, deriving, investigating, looking up (for example, looking up in a table, a database, or another data structure), or ascertaining are regarded as "determining" or "deciding." In addition, "determining" and "deciding" may include, for example, events in which events such as receiving (for example, receiving information), transmitting (for example, transmitting information), input, output, or accessing (for example, accessing data in a memory) are regarded as "determining" or "deciding." In addition, "determining" and "deciding" may include, for example, events in which events such as resolving, selecting, choosing, establishing, or comparing are regarded as "determining" or "deciding." In other words, "determining" and "deciding" may include events in which a certain operation is regarded as "determining" or "deciding."

The terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. In a case where the terms "connected," "coupled," or variations thereof used in this specification, two elements may be considered to be "connected" or "coupled" with each other using one or more electric wires, cables and/or a printed electrical connection or using electromagnetic energy such as electromagnetic energy having a wavelength in a radio frequency domain, a microwave region, or a light (both visible and invisible) region as non-limiting and non-exhaustive examples.

The phrase "on the basis of" used in the present specification is not limited to "only on the basis of" unless otherwise stated. In other words, a phrase "on the basis of" means both "only on the basis of" and "at least on the basis of".

Any reference to an element using a designation such as "first," "second," or the like used in the present specification does not generally restrict quantities or an order of those elements. Such designations can be used in the present specification as a convenient method of distinguishing between two or more elements. Thus, reference to the first and second elements does not mean that only two elements can be adopted there, or first element should precede the second element in a certain form.

In addition, "means" in the configuration of each of the above-described devices may be replaced with "unit", "circuit", "device", or the like.

"Including," "comprising (including)," and variations thereof are intended to be comprehensive, similarly to a term "equipped with" as long as the terms are used in this specification or claims set forth below. In addition, the term "or" used in the present specification or claims set forth below is intended not to be an exclusive disjunction.

In the whole present disclosure, a singular form includes both single and plural cases unless the singular form clearly indicates that single is single.

### Reference Signs List

- 11: CPU
- 12: RAM
- 13: ROM
- 15: Output device
- 16: Communication module
- 17: Auxiliary storage device
- 100: Display device
- 101: Withdrawal calculation unit
- 120: Withdrawal detection mechanism
- 103: Direction detection unit
- 104: Withdrawal speed detection unit
- 105: Withdrawal control mechanism
- 106: Display control unit
- 107: Display portion.

## Claims

1. A display device (100) comprising:
a withdrawable display means (107) configured to display content including first content; and
a display control means (106) configured to cause the display means (107) to display second content, being an operation screen of the first content, together with the first content when
a display width based on a withdrawal state of the display means (107) exceeds a predetermined reference (W2), wherein a display width of the second content in a withdrawal direction (A) is smaller than a display width of the first content,
a device direction detection means (103) configured to detect a device direction of the display device (100),
wherein, in a case where the display width has exceeded the reference (W2), the display control means (106) is configured to cause the display means (107) to display the second content further on the basis of the device direction detected by the device direction detection means (103).

2. A display device (100) comprising:
a withdrawable display means (107) configured to display content including first content; and
a display control means (106) configured to cause the display means (107) to display second content, being an operation screen of the first content, together with the first content when
a display width based on a withdrawal state of the display means (107) exceeds a predetermined reference (W2), wherein a display width of the second content in a withdrawal direction (A) is smaller than a display width of the first content,
a speed detection means (104) configured to detect a withdrawal speed of the display means (107),
wherein, in a case where the display width has exceeded the reference (W2), the display control means (106) is configured to cause the display means (107) to display the second content further on the basis of the withdrawal speed detected by the speed detection means (104).

3. A display device (100) comprising:
a withdrawable display means (107) configured to display content including first content; and
a display control means (106) configured to cause the display means (107) to display second content, being an operation screen of the first content, together with the first content after a display width based on a withdrawal state of the display means (107) exceeds a predetermined reference (W2), wherein a display width of the second content in a withdrawal direction (A) is smaller than a display width of the first content,
a contact state detection means (107) for detecting a contact state between a user and the display means (107),
wherein, in a case where the display width has exceeded the reference (W2), the display control means (106) is configured to cause the display means (107) to display the second content further on the basis of the contact state detected by the contact state detection means (107).

4. A display device (100) according to any of claims 1 to 3, wherein the second content is a button (211A-211D) operable by a user, and the display width of the second content in the withdrawal direction (A) is a width capable of displaying the button.

5. The display device according to any one of claims 1 to 4, further comprising:
a temporary fixing means (105) configured to temporarily fix the display means (107) at a position serving as the reference (W2).

## Patentansprüche

1. Eine Anzeigevorrichtung (100), umfassend:
ein herausziehbares Anzeigemittel (107), das konfiguriert ist, um Inhalt einschließlich ersten Inhalts anzuzeigen; und
ein Anzeigesteuerungsmittel (106), das konfiguriert ist, um das Anzeigemittel (107) zu veranlassen, zweiten Inhalt, der ein Bedienungsfenster des ersten Inhalts ist, zusammen mit dem ersten Inhalt anzuzeigen, wenn eine Anzeigeweite basierend auf einem Herauszugszustand des Anzeigemittels (107) einen vorbestimmten Bezugswert (W2) überschreitet, wobei eine Anzeigeweite des zweiten Inhalts in einer Herauszugsrichtung (A) kleiner als eine Anzeigeweite des ersten Inhalts ist,
ein Vorrichtungsrichtungserkennungsmittel (103), das konfiguriert ist, um eine Vorrichtungsrichtung der Anzeigevorrichtung (100) zu erkennen,
wobei, in einem Fall, in dem die Anzeigeweite den Bezugswert (W2) überschritten hat, das Anzeigesteuerungsmittel (106) konfiguriert ist, um das Anzeigemittel (107) zu veranlassen, den zweiten Inhalt weiter auf der Basis der Vorrichtungsrichtung, die durch das Vorrichtungsrichtungserkennungsmittel (103) erkannt wurde, anzuzeigen.

2. Eine Anzeigevorrichtung (100), umfassend:
ein herausziehbares Anzeigemittel (107), das konfiguriert ist, um Inhalt einschließlich ersten Inhalts anzuzeigen; und
ein Anzeigesteuerungsmittel (106), das konfiguriert ist, um das Anzeigemittel (107) zu veranlassen, zweiten Inhalt, der ein Bedienungsfenster des ersten Inhalts ist, zusammen mit dem ersten Inhalt anzuzeigen, wenn eine Anzeigeweite basierend auf einem Herauszugszustand des Anzeigemittels (107) einen vorbestimmten Bezugswert (W2) überschreitet, wobei eine Anzeigeweite des zweiten Inhalts in einer Herauszugsrichtung (A) kleiner als eine Anzeigeweite des ersten Inhalts ist,
ein Geschwindigkeitserkennungsmittel (104), das konfiguriert ist, um eine Herauszugsgeschwindigkeit des Anzeigemittels (107) zu erkennen,
wobei, in einem Fall, in dem die Anzeigeweite den Bezugswert (W2) überschritten hat, das Anzeigesteuerungsmittel (106) konfiguriert ist, um das Anzeigemittel (107) zu veranlassen, den zweiten Inhalt weiter auf der Basis der Herauszugsgeschwindigkeit, die durch das Geschwindigkeitserkennungsmittel (104) erkannt wurde, anzuzeigen.

3. Eine Anzeigevorrichtung (100), umfassend:
ein herausziehbares Anzeigemittel (107), das konfiguriert ist, um Inhalt einschließlich ersten Inhalts anzuzeigen; und
ein Anzeigesteuerungsmittel (106), das konfiguriert ist, um das Anzeigemittel (107) zu veranlassen, zweiten Inhalt, der ein Bedienungsfenster des ersten Inhalts ist, zusammen mit dem ersten Inhalt anzuzeigen, nachdem eine Anzeigeweite basierend auf einem Herauszugszustand des Anzeigemittels (107) einen vorbestimmten Bezugswert (W2) überschreitet, wobei eine Anzeigeweite des zweiten Inhalts in einer Herauszugsrichtung (A) kleiner als eine Anzeigeweite des ersten Inhalts ist,
ein Kontaktzustandserkennungsmittel (107) zum Erkennen eines Kontaktzustands zwischen einem Benutzer und dem Anzeigemittel (107),
wobei, in einem Fall, in dem die Anzeigeweite den Bezugswert (W2) überschritten hat, das Anzeigesteuerungsmittel (106) konfiguriert ist, um das Anzeigemittel (107) zu veranlassen, den zweiten Inhalt weiter auf der Basis des Kontaktzustands, der durch das Kontaktzustandserkennungsmittel (107) erkannt wurde, anzuzeigen.

4. Eine Anzeigevorrichtung (100) gemäß einem der Ansprüche 1 bis 3, wobei der zweite Inhalt ein durch den Benutzer bedienbarer Schalter (211A-211D) ist, und die Anzeigeweite des zweiten Inhalts in der Herauszugsrichtung (A) eine Weite ist, die es ermöglicht, den Schalter anzuzeigen.

5. Die Anzeigevorrichtung gemäß einem der Ansprüche 1 bis 4, weiter umfassend:
ein temporäres Befestigungsmittel (105), das konfiguriert ist, um das Anzeigemittel (107) temporär in einer Position, die als zweiter Bezugswert (W2) dient, zu befestigen.

## Revendications

1. Dispositif d'affichage (100) comprenant :
des moyens d'affichage pouvant être retirés (107) configurés pour afficher un contenu comprenant un premier contenu ; et
des moyens de commande d'affichage (106) configurés pour faire afficher par les moyens d'affichage (107) un second contenu, qui est un écran opérationnel du premier contenu, ainsi que le premier contenu, lorsque une largeur d'affichage basée sur un état de retrait des moyens d'affichage (107), dépasse une référence prédéterminée (W2),
dans lequel une largeur d'affichage du second contenu dans la direction du retrait (A), est inférieure à une largeur d'affichage du premier contenu,
des moyens de détection de direction de dispositif (103), configurés pour détecter la direction de dispositif du dispositif d'affichage (100),
dans lequel, dans le cas où la largeur d'affichage a dépassé la référence (W2), les moyens de commande d'affichage (106) sont configurés pour faire afficher par les moyens d'affichage (107), le second contenu plus loin sur la base de la direction de dispositif détectée par les moyens de détection de direction de dispositif (103).

2. Dispositif d'affichage (100) comprenant :
des moyens d'affichage pouvant être retirés (107) configurés pour afficher un contenu comprenant un premier contenu ; et
des moyens de commande d'affichage (106) configurés pour faire afficher par les moyens d'affichage (107) un second contenu, qui est un écran opérationnel du premier contenu, ainsi que le premier contenu, lorsque une largeur d'affichage basée sur un état de retrait des moyens d'affichage (107), dépasse une référence prédéterminée (W2),
dans lequel une largeur d'affichage du second contenu dans la direction du retrait (A) est inférieure à une largeur d'affichage du premier contenu,
des moyens de détection de vitesse (104) configurés pour détecter la vitesse de retrait des moyens d'affichage (107),
dans lequel, dans le cas où la largeur d'affichage a dépassé la référence (W2), les moyens de commande d'affichage (106) sont configurés pour faire afficher par les moyens d'affichage (107), le second contenu plus loin sur la base de la vitesse de retrait détectée par les moyens de détection de vitesse (104).

3. Dispositif d'affichage (100) comprenant :
des moyens d'affichage pouvant être retirés (107) configurés pour afficher un contenu comprenant un premier contenu ; et
des moyens de commande d'affichage (106) configurés pour faire afficher par les moyens d'affichage (107) un second contenu, qui est un écran opérationnel du premier contenu, ainsi que le premier contenu, une fois que la largeur d'affichage basée sur un état de retrait des moyens d'affichage (107), a dépassé une référence prédéterminée (W2),
dans lequel une largeur d'affichage du second contenu dans la direction du retrait (A) est inférieure à une largeur d'affichage du premier contenu,
des moyens de détection d'état de contact (107) destinés à détecter un état de contact entre un utilisateur et les moyens d'affichage (107),
dans lequel, dans le cas où la largeur d'affichage a dépassé la référence (W2), les moyens de commande d'affichage (106) sont configurés pour faire afficher par les moyens d'affichage (107), le second contenu plus loin sur la base de l'état de contact détecté par les moyens de détection d'état de contact (107).

4. Dispositif d'affichage (100) selon l'une quelconque des revendications 1 à 3,
dans lequel le second contenu est un bouton (211A - 211D) pouvant être actionné par un utilisateur, et la largeur d'affichage du second contenu dans la direction du retrait (A), est une largeur pouvant afficher le bouton.

5. Dispositif d'affichage (100) selon l'une quelconque des revendications 1 à 4, comprenant en outre :
des moyens de fixation provisoires (105) configurés pour fixer provisoirement les moyens d'affichage (107) en une position qui sert de référence (W2).
